# EUROPEAN PATENT SPECIFICATION

(11) **EP 3 719 366 B1**
(45) Date of publication and mention of the grant of the patent: **24.03.2021**
(21) Application number: 19167471.2
(22) Date of filing: 05.04.2019
(51) Int. Cl.: F16K 37/00, F24D 19/10, F24F 11/84, G05D 7/06

(54) **ACTUATOR CONTROLLER**
AKTUATORSTEUERGERÄT
ORGANE DE COMMANDE D'ACTIONNEUR

(43) Date of publication of application: 07.10.2020
(73) Proprietor: Siemens Schweiz AG, 8047 Zürich (CH)
(72) Inventor: Vogt, Andreas, 6005 Luzern (CH)
(74) Representative: Maier, Daniel Oliver

(56) References cited:
- EP-A1- 3 115 703
- EP-A1- 3 428 767
- US-A- 3 901 310
- US-A1- 2016 156 299
- US-A1- 2018 239 371

## Description

### Background

The present disclosure relates to optimisations for valves within heating, ventilation, and/or air-conditioning system. The present disclosure focuses on improved control of actuators of such valves.

Installations for heating, ventilation and/or air-conditioning (HVAC) are commonly made up of a plurality of circuits. Each circuit comprises one or several heating coils and/or cooling coils to provide heating and/or cooling to various parts of a structure. Terminal units generally are heating devices or cooling devices. A terminal unit of a domestic heating system can, for instance, be a radiator.

Flow control valves are commonly employed in HVAC systems. These systems typically circulate a fluid such as water through a plurality of conduits in order to provide heating or cooling. The purpose of a flow control valve is to achieve a controlled flow of a fluid through the conduits of the circuit.

The amount of water flowing through the valve is substantially governed by the position of a throttle. The position of the throttle is typically set by an actuator. The actuator sets the position of the throttle in response to a signal received from a controller.

Actuators of valves can be powered via the mains or via a battery. In case of battery powered actuators, battery life becomes paramount as it determines cycles for maintenance and/or replacement. A first way to extend battery life is to increase the capacity of a battery within a HVAC installation. This solution does, however, entail cost penalties.

A second way to extend battery life is to lower the power intake of the valve actuator. A plethora of parameters influence the power intake of an actuator within a HVAC system. These parameters include, but are not limited to,
- frequencies of start/stop operations,
- durations of such operations,
- frequencies of direction reversals,
- torque applied while changing valve strokes,
- ambient temperature,
- communication with other controllers,
- etc.

A patent application 16/031,310 was filed on 10 July 2018. The same application was published as US2019/018432A1 on 17 January 2019. The application 16/031,310 deals with control gain automation. A valve assembly 1 is disclosed having an actuator 5 as well as a valve member 4. A controller 9 calculates valve positions. The controller 9 then sends instructions to the actuator 5 thereby moving the valve member 4. The instructions sent by the controller 9 depend on whether or not a flow rate signal exceeds a threshold value.

A patent application US2016/156299A1 was filed by JOHNSON CONTROLS TECH CO, US on 29 December 2015. The application was published on 2 June 2016. US2016/156299A1 deals with a HVAC actuator with automatic end stop recalibration.

The present disclosure teaches an actuator for a valve that maximises battery life. An actuator with maximum battery life alleviates the cost burden and the risks involved in maintenance and replacement activities. To that end, the actuator lowers frequencies of start and/or stop operations. Also, the actuator of the instant disclosure largely dispenses with direction reversals.

### Summary

The present disclosure teaches a controller for an actuator and a control method that improve on battery life. To improve on battery life, the actuator controller inhibits unnecessary operations of an actuator. In so doing, the controller compares amplitudes of actuator operations to a threshold value. The actuator moves if an only if the amplitude exceeds the threshold value. Should the amplitude associated with an actuator operation be less than the threshold value, no operation of the actuator will be carried out.

It is a related object of the instant disclosure to provide a valve assembly with improved autonomy.

It is also an object of the present disclosure to provide an actuator controller and method of control wherein an actuator moves only by a fraction of the amplitude indicated by a control signal. The actuator can, by way of non-limiting examples, move by half of the indicated amplitude or by a quarter of the indicated amplitude or by two thirds of the indicated amplitude.

It is yet another object of the instant disclosure to provide an actuator controller and method of control wherein an actuator resumes operation in accordance after having previously moved only by a fraction of the indicated amplitude.

It is still an object of the instant disclosure to provide an actuator controller that is compact and minimises numbers of components that are prone to failure. It is a special object of the instant disclosure to provide an actuator that inhibits excessive cabling such as excessive power cabling.

It is still an object of the instant disclosure to provide an actuator controller that makes full use of the digital communication capabilities of a controller of a system.

### Brief description of the drawings

Various features will become apparent to those skilled in the art from the following detailed description of the disclosed non-limiting embodiments. The drawings that accompany the detailed description can be briefly described as follows:
FIG 1 is schematic showing a valve assembly having an actuator controller in operative communication with a site controller.
FIG 2 schematically illustrates details of an actuator controller.

### Detailed description

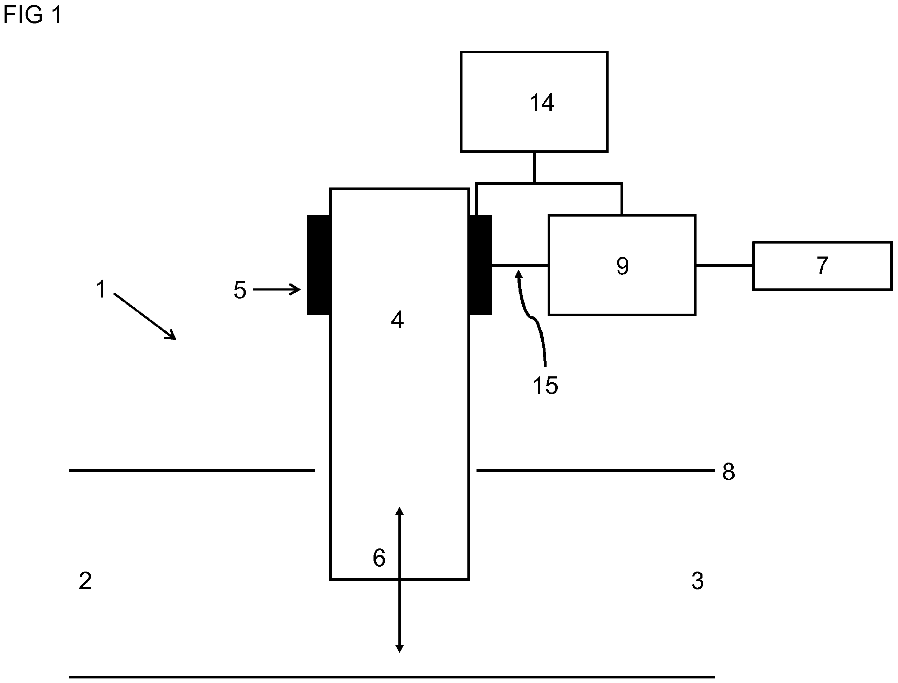

FIG 1 shows a valve assembly 1 having an inlet port 2 and an outlet port 3. A fluid path extends between the valve inlet port 2 and the valve outlet port 3 of a conduit 8. A valve member 4 is situated in the fluid path. FIG 1 shows the valve member 4 in a (partially) open position such that flow of a medium between the inlet port 2 and the outlet port 3 is enabled. Valve member 4 preferably also has a closed position to obturate fluid flow along the fluid path. Valve member 4 can also have a fully open position in which flow between the valve inlet port 2 and the valve outlet port 3 is fully enabled.

Ideally, the position of valve member 4 can change continuously between its fully open and its fully closed positions. In an alternate embodiment, the position of valve member 4 can change in (a finite number of) discrete steps between fully open and fully closed.

An actuator 5 directly or indirectly couples to valve member 4 to set its position. The actuator 5 can, by way of non-limiting example, be chosen from the group of solenoid actuator, voice coil, hydraulic actuator and/or pneumatic actuator. FIG 1 depicts an actuator 5 which axially displaces a valve member 4 as indicated by arrow 6. The instant disclosure also applies to valves and/or valve assemblies wherein the actuator 5 pivotally changes the position of valve member 4 such as butterfly valves.

FIG 1 also depicts a site controller 7. The site controller 7 is preferably located remotely from the valve assembly 1. It is envisaged that the site controller 7 is located at least ten meters, or at least twenty meters, or even at least fifty meters from the valve assembly 1. The site controller 7 can, by way of non-limiting example, be a cloud computer. The site controller 7 advantageously comprises a thermostat and/or a smart thermostat and/or a building management system and/or an energy management system. According to an aspect of the present disclosure, the site controller 7 is a thermostat and/or is a smart thermostat and/or is a building management system and/or is an energy management system.

The site controller 7 is in operative communication with an actuator controller 9. The site controller 7 communicates with the actuator controller 9 via suitable bus connections. The bus connection can be unidirectional from the site controller 7 to the actuator controller 9. The bus connection can also be bidirectional. According to an aspect of the present disclosure, the bus connection can be a wireless bus connection. It is envisaged that site controller 7 employs a suitable communication bus protocol, in particular a digital protocol, to communicate with the actuator controller 9. The actuator controller 9 and the site controller 7 ideally provide interfaces enabling (unidirectional and/or bidirectional) digital communication.

The controller 9 advantageously comprises a microprocessor having a memory and a processing unit. In a particular embodiment, the controller 9 is a microprocessor having a memory and a processing unit.

According to an aspect of the instant disclosure, the controller 9 comprises a microcontroller. In a particular embodiment, the controller 9 is a microcontroller.

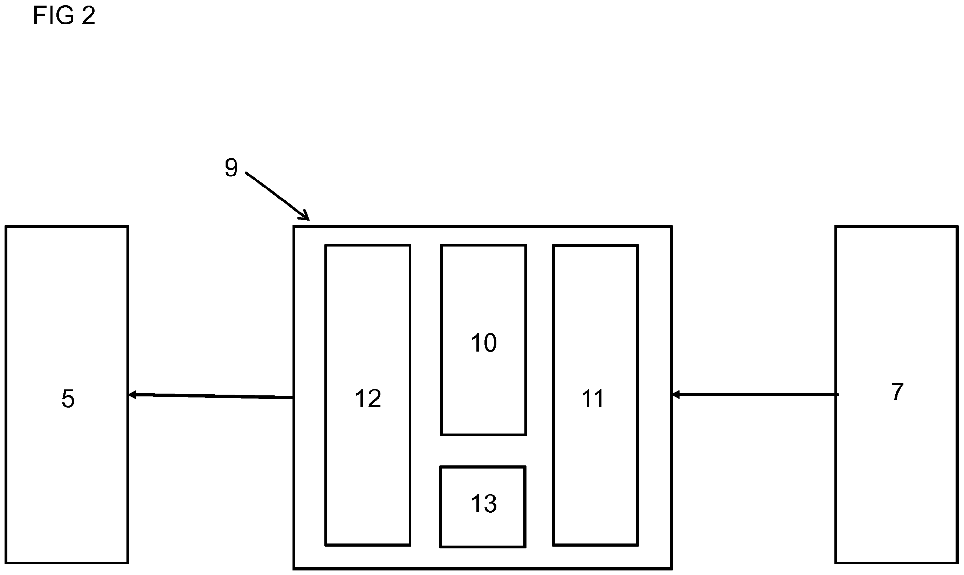

Now turning to FIG 2, details of the controller 9 are illustrated. The controller 9 comprises a processor 10 such as a 16-bit processor and/or a 32-bit processor and/or a 64-bit processor. The controller 9 advantageously comprises an arithmetic logic unit.

The controller 9 as shown on FIG 2 also comprises an input interface 11. The input interface 11 affords communication with an external controller such as a site controller 7. In an embodiment, the input interface 11 reads digital values. In an alternate embodiment, the input interface 11 reads analog values such as analog electric signals ranging from 0 Volt to 3 Volts and/or ranging from 0 Volt to 3.3 Volts and/or ranging from 0 Volt to 5 Volts. It is also envisaged that the input interface 11 reads electric currents ranging from 0 milliAmpere to 20 milliAmperes and/or from 4 milliAmperes to 20 milliAmperes. The input interface 11 advantageously comprises an analog-to-digital converter. The analog-to-digital of converter and the controller 9 are advantageously arranged on the same system-on-a-chip.

The controller 9 as shown on FIG 2 also comprises an output interface 12. The output interface 12 affords communication with an external actuator such as a valve actuator 5. In an embodiment, the output interface 12 sends digital values. In an alternate embodiment, the output interface 12 sends analog values such as analog electric signals ranging from 0 Volt to 3 Volts and/or ranging from 0 Volt to 3.3 Volts and/or ranging from 0 Volt to 5 Volts. It is also envisaged that the output interface 12 sends electric currents ranging from 0 milliAmpere to 20 milliAmperes and/or from 0 milliAmpere to 200 milliAmperes and/or ranging from 0 milliAmpere to 2000 milliAmperes. The output interface 12 advantageously comprises a digital-to-analog converter. The output interface 12 ideally also comprises an amplifier such as an operational amplifier.

The controller 9 further comprises a memory 13 such as a non-volatile and/or a non-transient memory 13. In an embodiment, the processor 10 has read-only access to the memory 13. A read-only configuration confers advantages in terms of reduced system complexity. In this case, the memory 13 can be a read-only memory. In an embodiment, the processor 10 has read-write access to the memory 13. A read-write configuration confers advantages in terms of greater flexibility. A read-write configuration accommodates for parameter changes. Changed parameters can be stored in the memory 13 and will be available for processing at a later time.

As described in detail herein, the present disclosure teaches an actuator controller (9) comprising:
an input interface (11) configured to receive input signals from a site controller (7);
an output interface (12) configured to send output signals to a valve actuator (5);
a processor (10) in operative communication with the input interface (11) and in operative communication with the output interface (12), the processor (10) being configured to:
   employ the input interface (11) to read a first input signal indicative of a first actuator position from the site controller (7);
   after reading the first input signal, employ the input interface (11) to read a second input signal indicative of a second actuator position from the site controller (7);
   determine a difference value indicative of a difference between the actuator positions indicated by the first input signal and by the second input signal;
   determine a first output signal as a function of the first input signal and as a function of the second input signal; and
   if and only if the difference value exceeds a predetermined threshold:
      employ the output interface (12) to send the first output signal to the valve actuator (5).

The second indicated actuator position preferably is different from the first indicated actuator position.

The input interface (11) advantageously is a wireless interface. It is envisaged that the input interface (11) is configured to communicate with a site controller (7) using wireless communications such as wireless local area network(s), Bluetooth®, Zigbee®, etc.

The input interface (11) communicating over a wireless bus advantageously provides a radio frequency module. The radio frequency module can be capable of phase-shift keying and/or of quaternary phase-shift keying. It is also envisaged that the radio frequency module improves on data transmission by limiting sizes of message blocks and/or by extra data redundancy. These functionalities may prove useful in environments wherein communication between the input interface (11) and a site controller (7) is hindered by obstacles such as thick concrete walls. These functionalities may also prove useful in environments wherein the input interface (11) communicates with a remote server over long distances.

The processor (10) advantageously is configured to calculate a difference value as a difference between the actuator positions indicated by the first input signal and by the second input signal.

The processor (10) more advantageously is configured to calculate a difference value as an absolute value of a difference between the actuator positions indicated by the first input signal and by the second input signal.

The processor (10) ideally is configured to calculate a first output signal as a function of the first input signal and as a function of the second input signal. It is also envisaged that the processor (10) is configured to produce a first output signal as a function of the first input signal and as a function of the second input signal.

In an embodiment, the processor (10) is configured to:
if and only if the difference value exceeds a predetermined threshold:
determine a first output signal as a function of the first input signal and as a function of the second input signal; and
employ the output interface (12) to send the first output signal to the valve actuator (5).

In another embodiment, the processor (10) is configured to:
if and only if the difference value exceeds a predetermined threshold:
calculate a first output signal as a function of the first input signal and as a function of the second input signal; and
employ the output interface (12) to send the first output signal to the valve actuator (5).

For the purposes of the instant disclosure, an "if and only if a then b" condition means that
a implies b, and
b implies a.
Hence, a difference value exceeding the predetermined threshold implies that the first output signal will be sent to the valve actuator (5) using the output interface (12). Also, the first output signal being sent to the valve actuator (5) using the output interface (12) implies that the difference value exceeds the predetermined threshold.

The instant disclosure also teaches any of the aforementioned actuator controllers (9), wherein the processor (10) is configured to:
determine the first output signal as a function of the first actuator position indicated by the first input signal and as a function of the difference value.

The processor (10) ideally is configured to calculate the first output signal as a function of the first actuator position indicated by the first input signal and as a function of the difference value.

In an embodiment, the processor (10) is configured to:
if and only if the difference value exceeds a predetermined threshold:
determine the first output signal as a function of the first actuator position indicated by the first input signal and as a function of the difference value; and
employ the output interface (12) to send the first output signal to the valve actuator (5).

In an embodiment, the processor (10) is configured to:
if and only if the difference value exceeds a predetermined threshold:
calculate the first output signal as a function of the first actuator position indicated by the first input signal and as a function of the difference value; and
employ the output interface (12) to send the first output signal to the valve actuator (5).

The instant disclosure also teaches any of the aforementioned actuator controllers (9), wherein the processor (10) is configured to:
determine the first output signal as a function of the first actuator position indicated by the first input signal and as a function of a fraction of the difference value.

The processor (10) ideally is configured to calculate the first output signal as a function of the first actuator position indicated by the first input signal and as a function of a fraction of the difference value.

The instant disclosure also teaches any of the aforementioned actuator controllers (9), wherein the processor (10) is configured to:
determine the first output signal as a function of the first actuator position indicated by the first input signal and as a function of half or one third of the difference value.

The processor (10) ideally is configured to calculate the first output signal as a function of the first actuator position indicated by the first input signal and as a function of half or one third of the difference value.

In an embodiment, the processor (10) is configured to:
if and only if the difference value exceeds a predetermined threshold:
determine the first output signal as a function of the first actuator position indicated by the first input signal and as a function of half the difference value; and
employ the output interface (12) to send the first output signal to the valve actuator (5).

In a particular embodiment, the processor (10) is configured to:
if and only if the difference value exceeds a predetermined threshold:
calculate the first output signal as a function of the first actuator position indicated by the first input signal and as a function of half the difference value; and
employ the output interface (12) to send the first output signal to the valve actuator (5).

The present disclosure also teaches any of the aforementioned actuator controllers (9), wherein the processor (10) is configured to:
determine the first output signal as the sum of the first actuator position indicated by the first input signal and of the difference value divided by a positive integer larger than one such as divided by two, divided by three, etc.

The processor (10) ideally is configured to calculate the first output signal as the sum of the first actuator position indicated by the first input signal and of the difference value divided by a positive integer larger than one such as divided by two, divided by three, etc.

In an embodiment, the processor (10) is configured to:
if and only if the difference value exceeds a predetermined threshold:
determine the first output signal as the sum of the first actuator position indicated by the first input signal and of the difference value divided by a positive integer larger than one such as divided by two, divided by three, etc.; and
employ the output interface (12) to send the first output signal to the valve actuator (5).

In a particular embodiment, the processor (10) is configured to:
if and only if the difference value exceeds a predetermined threshold:
calculate the first output signal as the sum of the first actuator position indicated by the first input signal and of the difference value divided by a positive integer larger than one such as divided by two, divided by three, etc.; and
employ the output interface (12) to send the first output signal to the valve actuator (5).

The instant disclosure also teaches any of the aforementioned actuator controllers (9), wherein the processor (10) is configured to:
after reading the second input signal, employ the input interface (11) to read a third input signal indicative of a third actuator position from the site controller (7);
determine a second output signal as a function of the third input signal; and
if and only if the difference value exceeds a predetermined threshold:
   employ the output interface (12) to send the second output signal to the valve actuator (5).

The third indicated actuator position advantageously is different from the second indicated actuator position and is different from the first indicated actuator position.

The processor (10) ideally is configured to calculate a second output signal as a function of the third input signal.

In an embodiment, the processor (10) is configured to:
if and only if the difference value exceeds a predetermined threshold:
determine a second output signal as a function of the third input signal; and
employ the output interface (12) to send the second output signal to the valve actuator (5).

In an embodiment, the processor (10) is configured to:
if and only if the difference value exceeds a predetermined threshold:
calculate a second output signal as a function of the third input signal; and
employ the output interface (12) to send the second output signal to the valve actuator (5).

The instant disclosure also teaches the aforementioned actuator controller (9), wherein the processor (10) is configured to determine the second output signal as an exclusive function of the third actuator position indicated by the third input signal.

The processor (10) ideally is configured to calculate the second output signal as an exclusive function of the third actuator position indicated by the third input signal.

In an embodiment, the processor (10) is configured to:
if and only if the difference value exceeds a predetermined threshold:
determine the second output signal as an exclusive function of the third actuator position indicated by the third input signal; and
employ the output interface (12) to send the second output signal to the valve actuator (5).

In an embodiment, the processor (10) is configured to:
if and only if the difference value exceeds a predetermined threshold:
calculate the second output signal as an exclusive function of the third actuator position indicated by the third input signal; and
employ the output interface (12) to send the second output signal to the valve actuator (5).

For the purposes of the instant disclosure, an exclusive function only takes the specified arguments. Whilst an exclusive function can take parameters, the number of arguments of the exclusive function is limited to the specified arguments.

The instant disclosure also teaches any of the aforementioned actuator controllers (9), the actuator controller (9) comprising a memory (13), the processor (10) being in operative communication with the memory (13), wherein the processor (10) is configured to:
read the predetermined threshold from the memory (13).

It is envisaged that the memory (13) is a non-volatile memory. It is also envisaged that the memory (13) is a non-transient memory. It is further envisaged that the memory (13) is a non-transitory memory.

The present disclosure also teaches any of the aforementioned actuator controllers (9), wherein the input interface (11) comprises an analog-to-digital converter.

It is envisaged that the input interface (11) is an analog-to-digital converter.

It is also envisaged that the processor (10) and the input interface (11), the input interface (11) comprising an analog-to-digital converter, are arranged on the same system-on-a-chip. The arrangement on the same system-on-a-chip is compact.

It is further envisaged that the processor (10) and the input interface (11), the input interface (11) being an analog-to-digital converter, are arranged on the same system-on-a-chip. The arrangement on the same system-on-a-chip is compact.

The instant disclosure further teaches any of the aforementioned actuator controllers (9), wherein the output interface (12) comprises a digital-to-analog converter.

It is envisaged that the output interface (12) is a digital-to-analog converter.

It is also envisaged that the processor (10) and the output interface (12) are arranged on the same system-on-a-chip. It is, in particular, envisaged that the processor (10) and the output interface (12), the output interface (12) comprising the digital-to-analog converter, are arranged on the same system-on-a-chip. It is further envisaged that the processor (10) and the output interface (12), the output interface (12) being a digital-to-analog converter, are arranged on the same system-on-a-chip. These arrangements on the same system-on-a-chip are compact thereby enabling miniaturised solutions.

The present disclosure yet further teaches any of the aforementioned actuator controllers (9), wherein the output interface (12) comprises an amplifier.

It is envisaged that the amplifier comprises an operational amplifier and/or comprises a transistor amplifier and/or comprises an insulated-gate bipolar transistor. Amplifiers having insulated-gate bipolar transistors afford compatibility with complex waveforms having pulse-width-modulation.

It is envisaged that the output interface (12) comprises a digital-to-analog converter and an amplifier. In a particular embodiment, the output interface (12) comprises a digital-to-analog converter, an amplifier such as an amplifier comprising an insulated-gate-bipolar-transistor, and a low-pass filter. The low-pass filter reduces electric stress on the windings of the valve actuator (5).

It is also envisaged that the processor (10) and the output interface (12) are arranged on the same system-on-a-chip. It is, in particular, envisaged that the processor (10) and the output interface (12), the output interface (12) comprising the digital-to-analog converter, are arranged on the same system-on-a-chip. It is further envisaged that the processor (10) and the output interface (12), the output interface (12) comprising the amplifier and comprising the digital-to-analog converter, are arranged on the same system-on-a-chip. These arrangements on the same system-on-a-chip are compact thereby enabling miniaturised solutions.

The instant disclosure also teaches a valve assembly (1), the valve assembly (1) comprising: an inlet port (2), an outlet port (3), and a fluid path extending between the inlet port (2) and the outlet port (3);
a valve member (4) acting on the fluid path, the valve member (4) being selectively movable between a closed position which closes the fluid path between the inlet port (2) and the outlet port (3), and an open position which opens the fluid path between the inlet port (2) and the outlet port (3);
a valve actuator (5) for selectively moving the valve member (4) between the closed position and the open position;
any of the actuator controllers (9) according to the instant disclosure, the actuator controller (9) being in operative communication with the valve actuator (5).

In an embodiment, the valve member (4) is situated in the fluid path. It is also envisaged that the valve member (4) protrudes into the fluid path.

The valve actuator (5) advantageously mechanically couples to the valve member (4).

The valve assembly (1) ideally comprises a conduit (8) such as a tubular conduit. The fluid path is then formed by the conduit (8).

According to an aspect of the present disclosure, the valve actuator (5) and the valve member (4) are secured relative to the valve assembly (1). According to a special aspect of the present disclosure, the valve actuator (5) and the valve member (4) are secured relative to the conduit (8).

According to another aspect of the present disclosure, the valve actuator (5) and the valve member (4) couple to the valve assembly (1). According to a special aspect of the present disclosure, the valve actuator (5) and the valve member (4) couple to the conduit (8).

According to yet another aspect of the present disclosure, the valve actuator (5) and the valve member (4) are mounted to the valve assembly (1). According to a special aspect of the present disclosure, the valve actuator (5) and the valve member (4) are mounted to the conduit (8).

It is also envisaged that the actuator controller (9) is in operative communication with an external controller such as the site controller (7). The external controller such as the site controller (7) is typically located remotely from the valve assembly (1).

The instant disclosure further teaches any of the aforementioned valve assemblies (1), wherein the valve assembly (1) additionally comprises a battery (14);
wherein the battery (14) electrically connects to the valve actuator (5); and
wherein the battery (14) is configured to supply the valve actuator (5) with power in order for the valve actuator (5) to selectively move the valve member (4) between the closed position and the open position.

According to an aspect of the present disclosure, the battery (14) is secured relative to the valve assembly (1). According to a special aspect of the present disclosure, the battery (14) is secured relative to the conduit (8).

In an embodiment, the battery (14) is configured to supply the valve actuator (5) with electric power.

It is envisaged that the battery (14) is rechargeable.

According to an aspect of the instant disclosure, the battery (14) also electrically connects to the actuator controller (9). The battery (14) is thus configured to supply the actuator controller (9) with (electric) power.

In an embodiment, the battery (14) is a flow battery. Suitable flow batteries comprise, by way of non-limiting examples, hydrogen-lithium bromated batteries, hydrogen-lithium chlorate batteries, bromine-hydrogen batteries, iron-tin batteries, iron-titanium batteries, iron-chrome batteries, vanadium-vanadium (sulphate) batteries, vanadium-vanadium (bromide) batteries, sodium-bromine polysulfide batteries, zinc-bromine batteries, lead-acid (methanesulfonate) batteries and/or zinc-cerium (methanesulfonate) batteries. Suitable flow batteries can also comprise organic flow batteries such as batteries based on quinones. None of the above lists is exhaustive. Battery-powered valve assemblies (1) confer advantages in terms of improved autonomy.

The instant disclosure yet further teaches any of the aforementioned valve assemblies (1), the valve assembly (1) additionally comprising a bus (15),
wherein the actuator controller (9) is in operative communication with the actuator (5) via the bus (15);
wherein the bus (15) is configured to transmit the first output signal from the actuator controller (9) to the valve actuator (5); and
is configured to transmit power in order for the valve actuator (5) to selectively move the valve member (4) between the closed position and the open position.

It is envisaged that the bus (15) is a communication bus such as a digital communication bus. It is also envisaged that the bus (15) is configured to transmit power such as electric power from the actuator controller (9) to the valve actuator (5) in order for the valve actuator (5) to selectively move the valve member (4) between the closed position and the open position.

It is also envisaged that the bus (15) is configured to transmit power such as electric power from the valve actuator (5) to the actuator controller (9). According to a special aspect of the present disclosure, the bus (15) is configured to transmit power such as electric power from the valve actuator (5) to the actuator controller (9) in order for the actuator controller (9) to execute instructions. It is also a special aspect of the present disclosure that the bus (15) is configured to transmit power such as electric power from the valve actuator (5) to the actuator controller (9) in order for the processor (10) of the actuator controller (9) to execute instructions.

Combined busses (15) for data and for power inhibit excessive cables between components thereby avoiding components prone to failure.

The present disclosure also teaches a method for controlling a valve actuator (5), the method comprising the steps of:
receiving a first input signal indicative of a first actuator position from a site controller (7);
after receiving the first input signal, receiving a second input signal indicative of a second actuator position from the site controller (7);
determining a difference value indicative of a difference between the actuator positions indicated by the first input signal and by the second input signal;
determining a first output signal as a function of the first input signal and as a function of the second input signal; and
if and only if the difference value exceeds a predetermined threshold:
   sending the first output signal to a valve actuator (5).

The method advantageously comprises a step of calculating a difference value as a difference between the actuator positions indicated by the first input signal and by the second input signal.

The method more advantageously comprises a step of calculating a difference value as an absolute value of a difference between the actuator positions indicated by the first input signal and by the second input signal.

The method ideally comprises a step of calculating a first output signal as a function of the first input signal and as a function of the second input signal. It is also envisaged that the method comprises a step of producing a first output signal as a function of the first input signal and as a function of the second input signal.

In an embodiment, the method comprises the steps of:
if and only if the difference value exceeds a predetermined threshold:
determining a first output signal as a function of the first input signal and as a function of the second input signal; and
sending the first output signal to a valve actuator (5).

In another embodiment, the method comprises the steps of:
if and only if the difference value exceeds a predetermined threshold:
calculating a first output signal as a function of the first input signal and as a function of the second input signal; and
sending the first output signal to a valve actuator (5).

In yet another embodiment, the method comprises the steps of:
if and only if the difference value exceeds a predetermined threshold:
producing a first output signal as a function of the first input signal and as a function of the second input signal; and
sending the first output signal to a valve actuator (5).

The instant disclosure further teaches a tangible machine-readable medium (13) having a set of instructions stored thereon that when executed by one or more processors (10) cause the one or more processors (10) to perform any of the aforementioned methods.

It is also envisaged that the machine-readable medium (13) is non-transient. It is further envisaged that the machine-readable medium (13) is non-transitory.

Any steps of a method according to the present disclosure can be embodied in hardware, in a software module executed by a processor, in a software module being executed using operating-system-level virtualization, in a cloud computing arrangement, or in a combination thereof. The software can include a firmware, a hardware driver run in the operating system, or an application program. Thus, the disclosure also relates to a computer program product for performing the operations presented herein. If implemented in software, the functions described can be stored as one or more instructions on a computer-readable medium. Some examples of storage media that can be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the disclosure and that numerous changes can be made therein without departing from the scope of the disclosure as defined by the following claims. It should also be understood that the disclosure is not restricted to the illustrated embodiments and that various modifications can be made within the scope of the following claims.

### Reference numerals

- 1: valve assembly
- 2: inlet port
- 3: outlet port
- 4: valve member
- 5: actuator
- 6: axis
- 7: site controller
- 8: conduit
- 9: actuator controller
- 10: processor
- 11: input interface
- 12: output interface
- 13: memory
- 14: battery
- 15: bus

## Claims

1. An actuator controller (9) comprising:
an input interface (11) configured to receive input signals from a site controller (7);
an output interface (12) configured to send output signals to a valve actuator (5);
a processor (10) in operative communication with the input interface (11) and in operative communication with the output interface (12), the processor (10) being configured to:
employ the input interface (11) to read a first input signal indicative of a first actuator position from the site controller (7);
after reading the first input signal, employ the input interface (11) to read a second input signal indicative of a second actuator position from the site controller (7);
determine a difference value indicative of a difference between the actuator positions indicated by the first input signal and by the second input signal;
determine a first output signal as a function of the first input signal and as a function of the second input signal;
**characterized in that**
if and only if the difference value exceeds a predetermined threshold:
employ the output interface (12) to send the first output signal to the valve actuator (5).

2. The actuator controller (9) according to claim 1, wherein the processor (10) is configured to:
determine the first output signal as a function of the first actuator position indicated by the first input signal and as a function of the difference value.

3. The actuator controller (9) according to claim 2, wherein the processor (10) is configured to:
determine the first output signal as a function of the first actuator position indicated by the first input signal and as a function of a fraction of the difference value.

4. The actuator controller (9) according to claim 3, wherein the processor (10) is configured to:
determine the first output signal as the sum of the first actuator position indicated by the first input signal and of the difference value divided by a positive integer larger than one.

5. The actuator controller (9) according to any of the claims 1 to 4, wherein the processor (10) is configured to:
after reading the second input signal, employ the input interface (11) to read a third input signal indicative of a third actuator position from the site controller (7);
determine a second output signal as a function of the third input signal; and
if and only if the difference value exceeds a predetermined threshold:
employ the output interface (12) to send the second output signal to the valve actuator (5).

6. The actuator controller (9) according to claim 5, wherein the processor (10) is configured to determine the second output signal as an exclusive function of the third actuator position indicated by the third input signal.

7. The actuator controller (9) according to any of the claims 1 to 6, the actuator controller (9) comprising a memory (13), the processor (10) being in operative communication with the memory (13), wherein the processor (10) is configured to:
read the predetermined threshold from the memory (13).

8. The actuator controller (9) according to any of the claims 1 to 7, wherein the input interface (11) comprises an analog-to-digital converter.

9. The actuator controller (9) according to any of the claims 1 to 8, wherein the output interface (12) comprises a digital-to-analog converter.

10. The actuator controller (9) according to any of the claims 1 to 9, wherein the output interface (12) comprises an amplifier.

11. A valve assembly (1) comprising:
an inlet port (2), an outlet port (3), and a fluid path extending between the inlet port (2) and the outlet port (3);
a valve member (4) acting on the fluid path, the valve member (4) being selectively movable between a closed position which closes the fluid path between the inlet port (2) and the outlet port (3), and an open position which opens the fluid path between the inlet port (2) and the outlet port (3);
a valve actuator (5) for selectively moving the valve member (4) between the closed position and the open position;
an actuator controller (9) according to any of the claims 1 to 10, the actuator controller (9) being in operative communication with the valve actuator (5).

12. The valve assembly (1) according to claim 11,
wherein the valve assembly (1) additionally comprises a battery (14);
wherein the battery (14) electrically connects to the valve actuator (5); and
wherein the battery (14) is configured to supply the valve actuator (5) with power in order for the valve actuator (5) to selectively move the valve member (4) between the closed position and the open position.

13. The valve assembly (1) according to any of the claims 11 to 12, the valve assembly (1) additionally comprising a bus (15),
wherein the actuator controller (9) is in operative communication with the actuator (5) via the bus (15);
wherein the bus (15) is configured to transmit the first output signal from the actuator controller (9) to the valve actuator (5); and
is configured to transmit power in order for the valve actuator (5) to selectively move the valve member (4) between the closed position and the open position.

14. A method for controlling a valve actuator (5), the method comprising the steps of:
receiving a first input signal indicative of a first actuator position from a site controller (7);
after receiving the first input signal, receiving a second input signal indicative of a second actuator position from the site controller (7);
determining a difference value indicative of a difference between the actuator positions indicated by the first input signal and by the second input signal;
determining a first output signal as a function of the first input signal and as a function of the second input signal;
**characterized in that**
if and only if the difference value exceeds a predetermined threshold:
sending the first output signal to a valve actuator (5).

15. A tangible machine-readable medium (13) having a set of instructions stored thereon that when executed by one or more processors (10) cause the one or more processors (10) to perform the method according to claim 14.

## Patentansprüche

1. Aktorautomatisierungsgerät (9), das Folgendes umfasst:
eine Eingangsschnittstelle (11), die dazu konfiguriert ist, Eingangssignale von einem Anlagenautomatisierungsgerät (7) zu empfangen;
eine Ausgangsschnittstelle (12), die dazu konfiguriert ist, Ausgangssignale an einen Ventilaktor (5) zu senden;
einen Prozessor (10), der im Betrieb mit der Eingangsschnittstelle (11) kommunikativ verbunden ist und im Betrieb mit der Ausgangsschnittstelle (12) kommunikativ verbunden ist, wobei der Prozessor (10) dazu konfiguriert ist:
die Eingangsschnittstelle (11) einzusetzen, um ein erstes Eingangssignal von dem Anlagenautomatisierungsgerät (7) zu lesen, das indikativ ist für eine erste Aktorposition;
nach dem Lesen des ersten Eingangssignals die Eingangsschnittstelle (11) einzusetzen, um ein zweites Eingangssignal von dem Anlagenautomatisierungsgerät (7) zu lesen, das indikativ ist für eine zweite Aktorposition,
einen Differenzwert zu bestimmen, der indikativ ist für eine Differenz zwischen den durch das erste Eingangssignal und durch das zweite Eingangssignal angegebenen Aktorpositionen;
ein erstes Ausgangssignal als eine Funktion des ersten Eingangssignals und als eine Funktion des zweiten Eingangssignals zu bestimmen;
**dadurch gekennzeichnet, dass**
wenn und nur wenn der Differenzwert einen vorbestimmten Schwellenwert überschreitet:
die Ausgangsschnittstelle (12) eingesetzt wird, um das erste Ausgangssignal an den Ventilaktor (5) zu senden.

2. Das Aktorautomatisierungsgerät (9) nach Anspruch 1, wobei der Prozessor (10) dazu konfiguriert ist:
das erste Ausgangssignal als eine Funktion der durch das erste Eingangssignal angegebenen ersten Aktorposition und als eine Funktion des Differenzwerts zu bestimmen.

3. Das Aktorautomatisierungsgerät (9) nach Anspruch 2, wobei der Prozessor (10) dazu konfiguriert ist:
das erste Ausgangssignal als eine Funktion der durch das erste Eingangssignal angegebenen ersten Aktorposition und als eine Funktion eines Bruchteils des Differenzwerts zu bestimmen.

4. Das Aktorautomatisierungsgerät (9) nach Anspruch 3, wobei der Prozessor (10) dazu konfiguriert ist:
das erste Ausgangssignal als die Summe der durch das erste Eingangssignal angegebenen ersten Aktorposition und des durch eine positive Ganzzahl größer als Eins dividierten Differenzwerts zu bestimmen.

5. Das Aktorautomatisierungsgerät (9) nach einem der Ansprüche 1 bis 4, wobei der Prozessor (10) dazu konfiguriert ist:
nach dem Lesen des zweiten Eingangssignals die Eingangsschnittstelle (11) einzusetzen, um ein drittes Eingangssignal zu lesen, das indikativ ist für eine dritte Aktorposition von dem Anlagenautomatisierungsgerät (7),
ein zweites Ausgangssignal als eine Funktion des dritten Eingangssignals zu bestimmen und
wenn und nur wenn der Differenzwert einen vorbestimmten Schwellenwert überschreitet:
die Ausgangsschnittstelle (12) einzusetzen, um das zweite Ausgangssignal an den Ventilaktor (5) zu senden.

6. Das Aktorautomatisierungsgerät (9) nach Anspruch 5, wobei der Prozessor (10) dazu konfiguriert ist, das zweite Ausgangssignal als eine exklusive Funktion der durch das dritte Eingangssignal angegebenen dritten Aktorposition zu bestimmen.

7. Das Aktorautomatisierungsgerät (9) nach einem der Ansprüche 1 bis 6, wobei das Aktorautomatisierungsgerät (9) einen Speicher (13) umfasst, wobei der Prozessor (10) im Betrieb mit dem Speicher (13) kommunikativ verbunden ist, wobei der Prozessor (10) dazu konfiguriert ist:
den vorbestimmten Schwellenwert aus dem Speicher (13) zu lesen.

8. Das Aktorautomatisierungsgerät (9) nach einem der Ansprüche 1 bis 7, wobei die Eingangsschnittstelle (11) einen Analog-Digital-Wandler umfasst.

9. Das Aktorautomatisierungsgerät (9) nach einem der Ansprüche 1 bis 8, wobei die Ausgangsschnittstelle (12) einen Digital-Analog-Wandler umfasst.

10. Das Aktorautomatisierungsgerät (9) nach einem der Ansprüche 1 bis 9, wobei die Ausgangsschnittstelle (12) einen Verstärker umfasst.

11. Ventilanordnung (1), die Folgendes umfasst:
einen Einlassanschluss (2), einen Auslassanschluss (3) und einen Flüssigkeitsweg, der sich zwischen dem Einlassanschluss (2) und dem Auslassanschluss (3) erstreckt;
ein Ventilelement (4), das auf dem Flüssigkeitsweg wirkt, wobei das Ventilelement (4) selektiv zwischen einer geschlossenen Position, die den Flüssigkeitsweg zwischen dem Einlassanschluss (2) und dem Auslassanschluss (3) schließt, und einer offenen Position, die den Flüssigkeitsweg zwischen dem Einlassanschluss (2) und dem Auslassanschluss (3) öffnet, bewegbar ist;
einen Ventilaktor (5) zum selektiven Bewegen des Ventilelements (4) zwischen der geschlossenen Position und der offenen Position;
ein Aktorautomatisierungsgerät (9) nach einem der Ansprüche 1 bis 10, wobei das Aktorautomatisierungsgerät (9) im Betrieb mit dem Ventilaktor (5) kommunikativ verbunden ist.

12. Die Ventilanordnung (1) nach Anspruch 11,
wobei die Ventilanordnung (1) zusätzlich eine Batterie (14) umfasst,
wobei die Batterie (14) elektrisch mit dem Ventilaktor (5) verbunden ist und
wobei die Batterie dazu konfiguriert ist, den Ventilaktor (5) mit Leistung zu versorgen, damit der Ventilaktor (5) das Ventilelement (4) selektiv zwischen der geschlossenen Position und der offenen Position bewegt.

13. Ventilanordnung (1) nach einem der Ansprüche 11 bis 12, wobei die Ventilanordnung (1) zusätzlich einen Bus (15) umfasst,
wobei das Aktorautomatisierungsgerät (9) im Betrieb über den Bus (15) mit dem Ventilaktor (5) kommunikativ verbunden ist,
wobei der Bus (15) dazu konfiguriert ist, das erste Ausgangssignal von dem Aktorautomatisierungsgerät (9) zu dem Ventilaktor (5) zu übertragen, und
dazu konfiguriert ist, Leistung zu übertragen, damit der Ventilaktor (5) das Ventilelement (4) selektiv zwischen der geschlossenen Position und der offenen Position bewegt.

14. Verfahren zum Steuern eines Ventilaktors (5), wobei das Verfahren die folgenden Schritte umfasst:
Empfangen eines ersten Eingangssignals, das indikativ ist für eine erste Aktorposition von dem Anlagenautomatisierungsgerät (7);
nach dem Empfangen des ersten Eingangssignals Empfangen eines zweiten Eingangssignals von dem Anlagenautomatisierungsgerät (7), das indikativ ist für eine zweite Aktorposition;
Bestimmen eines Differenzwerts, der indikativ ist für eine Differenz zwischen den durch das erste Eingangssignal und durch das zweite Eingangssignal angegebenen Aktorpositionen;
Bestimmen eines ersten Ausgangssignals als eine Funktion des ersten Eingangssignals und als eine Funktion des zweiten Eingangssignals;
**dadurch gekennzeichnet, dass**
wenn und nur wenn der Differenzwert einen vorbestimmten Schwellenwert überschreitet:
das erste Ausgangssignal an einen Ventilaktor (5) gesendet wird.

15. Fassbares maschinenlesbares Medium (13), auf dem ein Satz von Anweisungen gespeichert ist, die, wenn sie durch einen oder mehrere Prozessoren (10) ausgeführt werden, den einen oder die mehreren Prozessoren (10) veranlassen, das Verfahren nach Anspruch 14 auszuführen.

## Revendications

1. Contrôleur d'actionneur (9) comprenant:
une interface d'entrée (11) configurée pour recevoir des signaux d'entrée d'un contrôleur de site (7);
une interface de sortie (12) configurée pour envoyer des signaux de sortie à un actionneur de soupape (5);
un processeur (10) en communication fonctionnelle avec l'interface d'entrée (11) et en communication fonctionnelle avec l'interface de sortie (12), le processeur (10) étant configuré pour:
utiliser l'interface d'entrée (11) pour lire un premier signal d'entrée indicateur d'une première position d'actionneur à partir du contrôleur de site (7);
après la lecture du premier signal d'entrée, utiliser l'interface d'entrée (11) pour lire un second signal d'entrée indicateur d'une seconde position d'actionneur à partir du contrôleur de site (7);
déterminer une valeur de différence indicatrice d'une différence entre les positions d'actionneur indiquées par le premier signal d'entrée et par le second signal d'entrée;
déterminer un premier signal de sortie comme une fonction du premier signal d'entrée et comme une fonction du second signal d'entrée;
**caractérisé en ce que**
si et seulement si la valeur de différence dépasse un seuil prédéterminé:
utiliser l'interface de sortie (12) pour envoyer le premier signal de sortie à l'actionneur de soupape (5).

2. Le contrôleur d'actionneur (9) selon la revendication 1, dans lequel le processeur (10) est configuré pour:
déterminer le premier signal de sortie comme une fonction de la première position d'actionneur indiquée par le premier signal d'entrée et comme une fonction de la valeur de différence.

3. Le contrôleur d'actionneur (9) selon la revendication 2, dans lequel le processeur (10) est configuré pour:
déterminer le premier signal de sortie comme une fonction de la première position d'actionneur indiquée par le premier signal d'entrée et comme une fonction d'une fraction de la valeur de différence.

4. Le contrôleur d'actionneur (9) selon la revendication 3, dans lequel le processeur (10) est configuré pour:
déterminer le premier signal de sortie comme la somme de la première position d'actionneur indiquée par le premier signal d'entrée et la valeur de différence divisée par un nombre entier positif supérieur à un.

5. Le contrôleur d'actionneur (9) selon l'une quelconque des revendications 1 à 4, dans lequel le processeur (10) est configuré pour:
après la lecture du second signal d'entrée, utiliser l'interface d'entrée (11) pour lire un troisième signal d'entrée indicateur d'une troisième position d'actionneur à partir du contrôleur de site (7);
déterminer un second signal de sortie comme une fonction du troisième signal d'entrée; et
si et seulement si la valeur de différence excède un seuil prédéterminé:
utiliser l'interface de sortie (12) pour envoyer le second signal de sortie à l'actionneur de soupape (5).

6. Le contrôleur d'actionneur (9) selon la revendication 5, dans lequel le processeur (10) est configuré pour déterminer le second signal de sortie comme une fonction exclusive de la troisième position d'actionneur indiquée par le troisième signal d'entrée.

7. Le contrôleur d'actionneur (9) selon l'une quelconque des revendications 1 à 6, le contrôleur d'actionneur (9) comprenant une mémoire (13), le processeur (10) étant en communication fonctionnelle avec la mémoire (13), dans lequel le processeur (10) est configuré pour:
lire le seuil prédéterminé à partir de la mémoire (13).

8. Le contrôleur d'actionneur (9) selon l'une quelconque des revendications 1 à 7, dans lequel l'interface d'entrée (11) comprend un convertisseur analogique-numérique.

9. Le contrôleur d'actionneur (9) selon l'une quelconque des revendications 1 à 8, dans lequel l'interface de sortie (12) comprend un convertisseur numérique-analogique.

10. Le contrôleur d'actionneur (9) selon l'une quelconque des revendications 1 à 9, dans lequel l'interface de sortie (12) comprend un amplificateur.

11. Ensemble soupape (1) comprenant:
un port d'entrée (2), un port de sortie (3), et un trajet de liquide s'étendant entre le port d'entrée (2) et le port de sortie (3);
un élément de soupape (4) agissant sur le trajet de liquide, l'élément de soupape (4) étant déplaçable de manière sélective entre une position fermée qui ferme le trajet de liquide entre le port d'entrée (2) et le port de sortie (3), et une position ouverte qui ouvre le trajet de liquide entre le port d'entrée (2) et le port de sortie (3);
un actionneur de soupape (5) pour déplacer de manière sélective l'élément de soupape (4) entre la position fermée et la position ouverte;
un contrôleur d'actionneur (9) selon l'une quelconque des revendications 1 à 10, le contrôleur d'actionneur (9) étant en communication fonctionnelle avec l'actionneur de soupape (5).

12. L'ensemble soupape (1) selon la revendication 11,
dans lequel l'ensemble soupape (1) comprend de manière additionnelle une batterie (14);
dans lequel la batterie (14) se connecte de manière électrique à l'actionneur de soupape (5); et
dans lequel la batterie (14) est configurée pour fournir à l'actionneur de soupape (5) de l'énergie de manière que l'actionneur de soupape (5) déplace de manière sélective l'élément de soupape (4) entre la position fermée et la position ouverte.

13. L'ensemble soupape (1) selon l'une quelconque des revendications 11 à 12, l'ensemble soupape (1) comprenant de manière additionnelle un bus (15),
dans lequel le contrôleur d'actionneur (9) est en communication fonctionnelle avec l'actionneur (5) via le bus (15);
dans lequel le bus (15) est configuré pour transmettre le premier signal de sortie du contrôleur d'actionneur (9) à l'actionneur de soupape (5); et
est configuré pour transmettre de l'énergie de manière que l'actionneur de soupape (5) déplace de manière sélective l'élément de soupape (4) entre la position fermée et la position ouverte.

14. Procédé de commande d'un actionneur de soupape (5), le procédé comprenant les étapes de:
recevoir un premier signal d'entrée indicateur d'une première position d'actionneur d'un contrôleur de site (7);
après la réception du premier signal d'entrée, récevoir un second signal d'entrée indicateur d'une seconde position d'actionneur à partir du contrôleur de site (7);
déterminer une valeur de différence indicatrice d'une différence entre les positions d'actionneur indiquées par le premier signal d'entrée et par le second signal d'entrée;
déterminer un premier signal de sortie comme une fonction du premier signal d'entrée et comme une fonction du second signal d'entrée;
**caractérisé en ce que**
si et seulement si la valeur de différence excède un seuil prédéterminé:
envoyer le premier signal de sortie à un actionneur de soupape (5).

15. Support tangible lisible par machine (13) ayant un jeu d'instructions stockées dessus qui lorsqu'exécutées par un ou plusieurs processeurs (10) amènent le un ou plusieurs processeurs (10) à réaliser le procédé selon la revendication 14.
